# FASCICULE DE BREVET EUROPEEN

(11) **EP 0 626 231 B1**
(45) Date de publication et mention de la délivrance du brevet: **09.10.1996**
(21) Numéro de dépôt: 94401146.9
(22) Date de dépôt: 25.05.1994
(51) Int. Cl.: B23K 26/00, F01D 5/14

(54) **Procédé de soudage laser d'un assemblage de deux pièces métalliques**
Laserschweissverfahren um zwei metallischen Werkstücken
Laser welding process of two workpieces

(30) Priorité: 25.05.1993 FR 9306208
(43) Date de publication de la demande: 30.11.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Havard, Jacques Georges Wilfrid René, F-77550 Moissy Cramayel (FR); Jouardet, Michel Robert, F-91590 Guigneville (FR); Loreau, Jean-Yves Maurice, F-94320 Thiais (FR); Zanolin, Gérard Louis, F-91490 Oncy sur Ecole (FR)

(56) Documents cités:
- EP-A- 0 445 633
- US-A- 3 695 778
- US-A- 4 644 126

## Description

### Domaine de l'invention

L'invention concerne la fixation définitive d'un assemblage de deux pièces métalliques de forme en "T", accessible uniquement sur un côté externe. Elle permet de réaliser en particulier l'assemblage d'un caisson fermé et cloisonné de faible épaisseur, tel qu'un bras de liaison placé dans le canal de flux froid, ou canal externe, placé en aval de la soufflante dans un turboréacteur.

### Art antérieur et problème posé.

De tels bras ont pour fonction de raidir la structure du turboréacteur, notamment en créant une liaison entre deux enveloppes annulaires coaxiales et d'éventuellement redresser ou dévier le flux d'air froid circulant dans le canal externe. Ces bras sont des aubes métalliques constituées de préférence d'un caisson creux à l'intérieur duquel sont placés des éléments raidisseurs. De tels caissons sont difficiles à réaliser, et nécessitent de nombreuses opérations, notamment pour la fabrication des pièces primaires et la réalisation de l'assemblage et de la fixation pour mettre le caisson aux cotes déterminées.

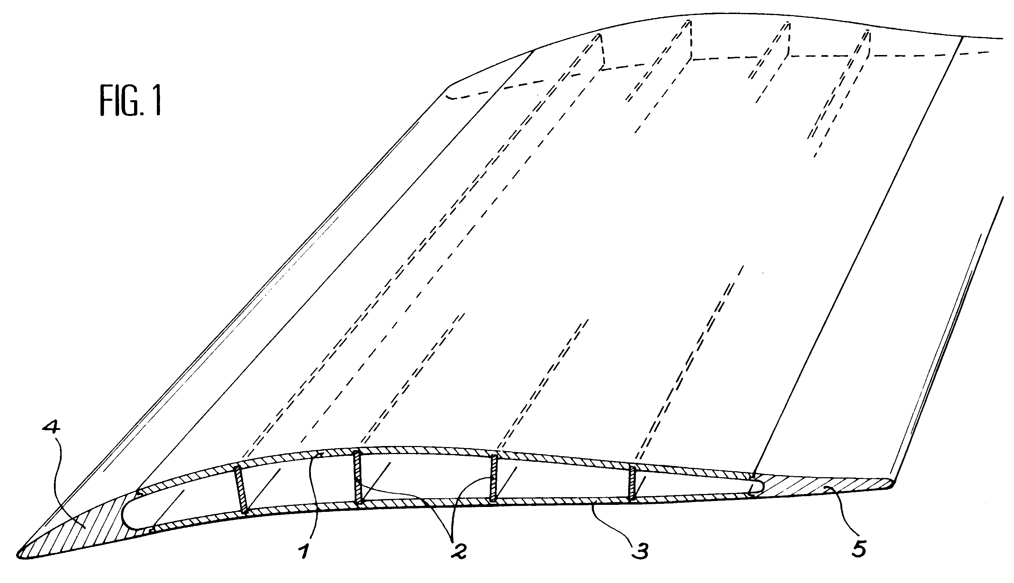

En référence à la figure 1, la pièce à obtenir est donc une sorte de panneau creux constitué de deux tôles 1 et 3 relativement minces, maintenues écartées à des distances déterminées par des raidisseurs 2. La forme affectée par un tel bras peut être variable suivant l'emplacement de ce bras dans le turboréacteur. Cette forme est généralement tributaire de la fonction de déviation ou de redressage du flux froid que peut remplir un tel bras.

De plus, on s'aperçoit qu'il est impossible d'effectuer des opérations de fixation des raidisseurs 2 sur les tôles 1 et 3 à partir de l'intérieur du caisson. Le soudage au laser CO₂ d'un assemblage en T par la surface inférieure de la tête du T est connu: voir le document EP-A-445 633, par exemple.

Le but de l'invention est de remédier à ces inconvénients en proposant un procédé d'assemblage et de fixation de tels caissons uniquement par l'extérieur de celui-ci.

### Résumé de l'invention.

L'objet principal de l'invention est donc un procédé de soudage par laser, d'un assemblage en T de deux pièces métalliques disposées, l'assemblage n'étant accessible que du côté de la tête du T par une surface externe, le procédé comportant les phases suivantes :
- formage d'une rainure sur la surface inférieure de la tête du T, d'une largeur égale à l'épaisseur du pied du T et d'une profondeur déterminée ;
- assemblage du pied du T dans la rainure ;
- soudage au laser CO₂ de l'assemblage par la surface supérieure de la tête du T par deux soudures inclinées par rapport à la perpendiculaire à la surface supérieure de la tête du T et d'inclinaisons respectives inversées, de manière à ce que les deux axes de soudage se croisent au voisinage de la surface supérieure externe du T, les directions de l'axe du faisceau laser étant de préférence respectivement parallèles aux plans passant par le point A et par les coins formés par le pied et la tête et un écart éventuel par rapport auxdits plans étant déterminé en fonction de la profondeur P.

De préférence, l'angle d'inclinaison des axes de soudage est tel que chaque axe de soudage traverse un coin supérieur des pieds du T.

Dans la réalisation préférentielle de l'invention, les pièces sont en alliage de titane et d'aluminium. De préférence, on utilise l'alliage TA6V. Toutefois, l'invention reste applicable à de nombreux matériaux et notamment à des superalliages à base de nickel ou de cobalt utilisés dans d'autres parties de turboréacteur.

Dans la mise en oeuvre principale du procédé selon l'invention, la profondeur de la rainure est évolutive entre un dixième et deux millimètres le long du profil de la tête du T et est fonction de l'épaisseur du pied du T.

Dans ce cas, l'angle d'inclinaison des axes de soudage est de préférence égal à quinze degrés. L'épaisseur de la tête du T est de préférence comprise entre 2,5 et 3 millimètres. Ce cas concerne l'application du procédé à la fabrication d'un bras de canal froid d'un turboréacteur, et l'épaisseur du pied du T peut être égale à 1,5 millimètres. Le soudage est de préférence continu sur toute la longueur de ces cloisons.

### Liste des figures

L'invention et ses différentes caractéristiques seront mieux comprises à la lecture de la description qui est accompagnée de deux figures représentant respectivement :
- Figure 1, un caisson constituant un bras de canal externe d'un turboréacteur et pour lequel le procédé selon l'invention a été utilisé ;
- figure 2, en coupe, l'assemblage par soudage selon l'invention dans un montage en T.

### Description détaillée d'un mode de réalisation de l'invention.

En référence à la figure 1, la pièce tenue par le procédé selon l'invention est, dans ce cas, un des bras fixes disposés dans le canal externe d'un turboréacteur, en amont des dispositifs inverseurs de poussée. Plus exactement, ce type de bras a une principale fonction qui est de consolider la structure du turboréacteur. En outre, ce type de bras peut avoir une fonction aérodynamique et servir de redresseur ou de déflecteur du flux d'air traversant le canal externe. Comme on peut le constater, ce type de bras est relativement plat, effilé mais profilé de façon précise. Dans le cas de la figure 1, la tôle supérieure 1, c'est-à-dire la tôle extrados, a une forme plus bombée que la tôle inférieure intrados, 3 ces deux formes étant définies par la fonction aérodynamique que le bras doit remplir vis-à-vis du flux d'air. Ces deux tôles supérieure extrados 1 et inférieure intrados 3 se rejoignent en un bord d'attaque 4 et un bord de fuite 5 effilés.

La fabrication d'un tel bras impose la fixation définitive des cloisons 2 entre ces deux tôles 1 et 3. Bien entendu, cette fixation ne peut s'effectuer que par l'extérieure, l'intérieur du volume défini par les deux tôles 1 et 3 n'étant pas accessible lors de cette opération de fixation des cloisons 2.

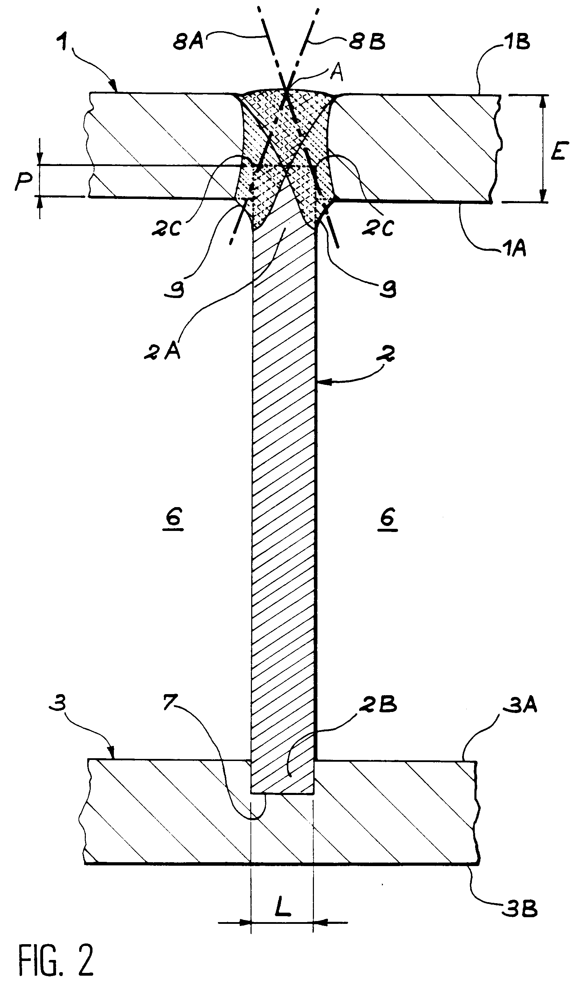

En référence à la figure 2, on retrouve le montage assemblant une cloison 2 avec une tôle supérieure extrados 1 et une tôle inférieure intrados 3. L'assemblage supérieur est représenté avec la soudure, tandis que l'assemblage inférieur est représenté avant le soudage. Ce montage a une forme de I et est donc constitué de deux assemblages en forme de T. On rappelle que le volume intérieur 6 du caisson 1 assemblé est inaccessible à un opérateur ou à un matériel de fixation tel qu'un appareil de soudage.

Selon l'invention, on utilise le soudage laser au CO₂ pour assembler chaque extrémité 2A et 2B d'une cloison avec respectivement la tôle supérieure extrados 1 et la tôle inférieure intrados 3.

Pour ce faire, et comme le montre le bas de la figure 2, l'usinage d'une rainure 7 dans chacune des surfaces internes 1A et 3A des tôles extrados 1 et intrados 3 est nécessaire. La largeur L de cette rainure 7 correspond à l'épaisseur de la cloison 2, qui constitue le pied de chacun des deux assemblages en T. En fonction de la.variation du profil des tôles 1 et 3, la profondeur P de la rainure 7 est évolutive le long de ce profil.

En outre, dans le présent exemple de réalisation, l'écart entre les tôles 1et 3 de la figure 1 varie d'une extrémité à l'autre, ainsi qu'en conséquence la hauteur des cloisons 2 qui présentent ainsi un profil conique.

La deuxième opération consiste à assembler la cloison 2 dans chacune des rainures 7 des tôles extrados 1 et intrados 3 pour constituer un I comme le représente la figure 2.

Le soudage s'effectue selon l'invention selon deux axes 8A et 8B, inclinés l'un par rapport à l'autre et se croisant au niveau de la surface supérieure 1B de tôle extrados 1. Ces deux axes 8A et 8B forment donc un X dont le centre est placé dans la partie supérieure de la tôle extrados 1. On remarque sur la figure 2 que ces deux axes de soudage, 8A et 8B traversent cette tôle extrados 1 et les coins 2C de la cloison 2.

Puisque l'énergie apportée par le laser au CO₂ est concentré le long des deux axes de soudage 8A et 8B, elle traverse la tôle extrados 1 et les deux coins 2C. Toute la matière métallique se trouvant dans l'environnement immédiat d'un tel axe de soudage 8A ou 8B est soumise à une élévation locale très importante de la température. Il s'ensuit une fusion du métal et une mixtion des métaux fondus issus de la tôle extrados 1 et de la cloison 2. On obtient ainsi, par deux soudures inclinées en X une soudure globale de la tôle extrados 1 sur la cloison 2.

Plusieurs zones hachurées représente l'élévation de température qui est maximale dans la partie supérieure de la tôle extrados 1 et qui se poursuit de part et d'autre vers le bas en direction des coins 2C de la cloison 2. On constate également l'apparition par fusion d'un congé 9 à l'intérieur de chacun des coins formés par ces deux pièces. La qualité du résultat et qui est obtenue grâce à l'invention est conditionnée par la réalisation d'une continuité métallique sur toute la longueur de la cloison 2 du congé de raccordement 9 obtenu dans les coins 2C formés par les pièces.

Dans le cadre de la fabrication d'un bras de canal externe pour un turboréacteur et dans le cas de la fabrication d'un caisson représenté par la figure 1, il est possible de mieux définir les valeurs des dimensions :
- l'angle S d'inclinaison des axes de soudage 8A et 8B avoisine la valeur de 15 degrés.
- l'épaisseur E de la tôle extrados 1 varie entre 2,5 mm et 3 mm ;
- la profondeur P de la rainure 7 est évolutive entre 0,1 mmet 2 mm, et
- l'épaisseur L de la cloison 2 égale à 1,5 mm.
On note que dans ce type d'assemblage, la pièce faisant office de pied du T, en l'occurrence la cloison 2, doit être plus mince que la pièce faisant office de tête du T, en l'occurrence les tôles extrados 1 et intrados 3.

Pour d'autres applications et pour des pièces de dimensions différentes, les paramètres géométriques de l'assemblage ainsi que le réglage des paramètres de soudage sont déterminés expérimentalement dans chaque cas, en conservant les critères de qualité précédemment définis :
- obtention d'un congé de raccordement 9 continu réalisant une continuité métallique sur toute la longueur de cloison 2 dans les coins 2C formés par les pièces assemblées ;
- fusion complète obtenue sur le sommet de cloison 2 à l'extrémité du pied du T d'assemblage.

Dans ces conditions, l'inclinaison des axes de soudage laser est déterminée par une direction parallèle au plan passant par le coin 2C formé par les pièces 1 et 2 et par un point A où le plan médian de cloison coupe la surface externe de la tôle, un écart éventuel par rapport à ce plan étant déterminé en fonction de la profondeur P de la rainure 7, tout en restant parallèle.

Dans le cas de fabrication d'un caisson devant faire office de bras dans le cas d'un canal externe d'un turboréacteur, le soudage des cloisons 2 sur les tôles extrados 1 et intrados 3 se fait en continu, c'est-à-dire que la soudure est ininterrompue sur toute la longueur des cloisons. La vitesse de déplacement des têtes de soudage peut être de l'ordre de 2 m par minute. Les tôles sont en un alliage de titane et d'aluminium, en particulier celui dénommé TA6V dans l'exemple décrit. Toutefois, l'invention est applicable à tout alliage métallique soudable.

### Avantages de l'invention

L'utilisation d'un laser CO₂ permet de limiter les déformations par rapport à un procédé d'assemblage au plasma et permet d'assurer la formation d'un congé de raccordement 9 plus progressif par rapport à un congé obtenu par d'autres procédés, notamment par un procédé de soudage au moyen d'un faisceau d'électrons.

Ce type d'assemblage est possible sur tous les matériaux métalliques, quelle que soit l'épaisseur des tôles, étant entendu qu'il est indispensable de respecter les proportions des dimensions des pièces définies dans la description.

Le laser CO₂ permet d'obtenir après le soudage un assemblage fini ne nécessitant par de reprises d'usinage, notamment au niveau des soudures.

Ce procédé permet également de souder des cloisons intérieures rectilignes, malgré des profils d'intrados et d'extrados plus ou moins cambrés. Des protections mécaniques ne sont pas nécessaires vis-à-vis de l'impact du faisceau laser CO₂ sur la tôle faisant office de pied du T, du fait de la faible énergie du faisceau laser après la pénétration de la pièce faisant office de tête du T, du fait de la diffraction rapide du faisceau.

Le procédé selon l'invention s'applique à n'importe quel caisson cloisonné dont les tôles sont de faible épaisseur.

## Revendications

1. Procédé d'un soudage laser d'un assemblage en forme de T de deux pièces métalliques (1, 3 et 2) accessible seulement du côté de la tête du T par une surface externe (1B, 3B), c'est-à-dire inaccessible par le côté du pied du T (2), le procédé comportant les étapes suivantes :
- formage d'une rainure (7) sur la surface inférieure (1A, 3A) de la tête du T (1, 3) d'une largeur (L) égale à l'épaisseur du pied du T (2) et d'une profondeur déterminée (P).
- assemblage du pied du T (2) dans la rainure (7),
- soudage au laser CO₂ de l'assemblage par la surface supérieure (1B, 3B) de la tête du T (1, 3) par deux soudures inclinées par rapport à une droite perpendiculaire à la surface supérieure externe (1B, 3B) en un point (A) et d'inclinaisons respectives inversée, de manière à ce que les deux axes de soudage (8A, 8B) se croisent au voisinage de la surface externe supérieure (1B, 3B) de la tête du T (1,3).

2. Procédé selon la revendication 1, caractérisé en ce que les directions des axes de soudage (8A, 8B) sont respectivement parallèles aux plans passant par un point (A) de la surface externe supérieure (1B, 3B) et du plan médian du T et par les coins formés par le pied (2) et la tête (1, 3) du T, un écart éventuel par rapport auxdits plans étant déterminé en fonction de la profondeur (P) de la rainure (7).

3. Procédé selon la revendication 1 ou 2, caractérisé en ce que l'angle d'inclinaison (S) des axes de soudage (8A, 8B), l'épaisseur (L) du pied du T (2) et la profondeur (P) de la rainure (7) sont tels que chaque axe de soudage (8A, 8B) traverse un coin supérieur (2C) du pied du T (2).

4. Procédé selon l'une des revendication 1 à 3, caractérisé en ce que le soudage est fait de manière continue et de façon à assurer une refusion complète de l'extrémité du pied du T (2) et l'obtention d'un congé de raccordement (9) continu dans chaque coin d'assemblage de la tête (1,3) et du pied (2) du T.

5. Procédé selon la revendication 4, appliqué à la fabrication d'un bras de canal externe d'un turboréacteur avec des pièces en alliage de titane et d'aluminium, tel que le TA6V.

6. Procédé selon la revendication 5, caractérisé en ce que l'épaisseur E de la tête du T (1,3) est comprise entre 2,5 et 3 mm, l'épaisseur L du pied du T (2) est égale à 1,5 mm, la profondeur (P) de la rainure (7) est évolutive entre 0, 1 et 2 mm le long du profil.

7. Procédé selon la revendication 6, caractérisé en ce que l'angle (S) d'inclinaison des axes de soudage (8A, 8B) est environ égal à 15 degrés.

## Claims

1. Process for laser welding a T-shaped assembly of two metal workpieces (1, 3 and 2) which is accessible only from the side on which the head of the T lies, via an external surface (1B, 3B), that is to say not accessible via the side on which the foot of the T (2) lies, the process comprising the following steps:
- forming a groove (7) in the lower surface (1A, 3A) of the head of the T (1, 3) having a width (L) equal to the thickness of the foot of the T (2) and having a defined depth (P);
- fitting the foot of the T (2) into the groove (7);
- welding the assembly, using a CO₂ laser, via the upper surface (1B, 3B) of the head of the T (1, 3) by means of two welds which are inclined with respect to a line perpendicular to the external upper surface (1B, 3B) at a point (A) and have reverse respective inclinations so that the two welding axes (8A, 8B) intersect in the vicinity of the upper external surface (1B, 3B) of the head of the T (1, 3).

2. Process according to Claim 1, characterized in that the directions of the welding axes (8A, 8B) are respectively parallel to the planes passing through a point (A) on the upper external surface (1B, 3B) and on the mid-plane of the T and through the corners formed by the foot (2) and the head (1, 3) of the T, a possible offset with respect to the said planes being determined as a function of the depth (P) of the groove (7).

3. Process according to Claim 1 or 2, characterized in that the angle of inclination (S) of the welding axes (8A, 8B), the thickness (L) of the foot of the T (2) and the depth (P) of the groove (7) are such that each welding axis (8A, 8B) passes through an upper corner (2C) of the foot of the T (2).

4. Process according to one of Claims 1 to 3, characterized in that the welding is performed continuously and in such way as to ensure that the end of the foot of the T (2) completely remelts and that a continuous connecting fillet (9) is obtained in each corner where the head (1, 3) and the foot (2) of the T are joined together.

5. Process according to Claim 4, applied to the manufacture of an external duct arm of a turbojet engine with components made of a titanium-aluminium alloy, such as TA6V.

6. Process according to Claim 5, characterized in that the thickness E of the head of the T (1, 3) is between 2.5 and 3 mm, the thickness L of the foot of the T (2) is equal to 1.5 mm and the depth (P) of the groove (7) varies between 0.1 and 2 mm along the profile.

7. Process according to Claim 6, characterized in that the angle of inclination (S) of the welding axes (8A, 8B) is approximately equal to 15 degrees.

## Patentansprüche

1. Laserschweißverfahren einer T-förmigen Anordnung von zwei metallischen Werkstücken (1, 3 und 2), die nur vom Kopf des T von einer Außenseite (1B, 3B) zugänglich ist, d.h. vom Fuß des T (2) unzugänglich ist, wobei das Verfahren die folgenden Schritte aufweist:
- Bildung einer Vertiefung (7) auf der Innenseite (1A, 3A) des Kopfes des T (1, 3) mit einer Breite (L), die gleich der Dicke des Fußes des T (2) ist, und mit einer bestimmten Tiefe (P);
- Anordnung des Fußes des T (2) in der Vertiefung (7);
- Schweißen mit einem CO₂-Laser der Anordnung von der Oberseite (1B, 3B) des Kopfes des T (1, 3) durch zwei bezüglich einer zu der äußeren Oberseite senkrechten Geraden durch einen Punkt (A) geneigten Schweißungen und mit jeweils umgekehrter Neigung, so daß sich die beiden Schweißachsen (8A, 8B) in der Nähe der äußeren Oberseite (1B, 3B) des Kopfes des T (1, 3) kreuzen.

2. Verfahren nach Anspruch 1,
**dadurch gekennzeichnet,**
daß die Richtungen der Schweißachsen (8A, 8B) jeweils parallel zu den Ebenen sind, die durch einen Punkt (A) der äußeren Oberseite (1B; 3B) und der Mittelebene des T und durch die Ecken hindurchgehen, die durch den Fuß (2) und den Kopf (1, 3) des T gebildet werden, wobei ein eventueller Abstand bezüglich dieser Ebenen abhängig von der Tiefe (P) der Vertiefung (7) festgelegt wird.

3. Verfahren nach Anspruch 1 oder 2,
**dadurch gekennzeichnet,**
daß der Neigungswinkel (S) der Schweißachsen (8A, 8B), die Dicke (L) des Fußes des T (2) und die Tiefe (P) der Vertiefung (7) so sind, daß jede Schweißachse (8A, 8B) durch eine obere Ecke (2C) des Fußes des T (2) hindurchgeht.

4. Verfahren nach einem der Ansprüche 1 bis 3,
**dadurch gekennzeichnet,**
daß die Schweißung kontinuierlich ausgeführt wird und derart, daß eine vollständige Umschmelzung des Endes des Fußes des T (2) und das Erhalten einer durchgehenden Verbindungskehle (9) in jeder Verbindungsecke des Kopfes (1, 3) und des Fußes (2) des T gewährleistet werden.

5. Verfahren nach Anspruch 4,
angewendet auf die Herstellung einer Strebe des Außenkanales einer Turbomaschine mit Teilen aus einer Legierung aus Titan und Aluminium, wie beispielsweise TA6V.

6. Verfahren nach Anspruch 5,
**dadurch gekennzeichnet,**
daß die Dicke E des Kopfes des T (1, 3) zwischen 2,5 und 3 mm liegt, die Dicke L des Fußes des T (2) gleich 1,5 mm ist und sich die Tiefe (P) der Vertiefung (7) zwischen 0,1 und 2 mm längs des Profiles entwickelt.

7. Verfahren nach Anspruch 6,
**dadurch gekennzeichnet,**
daß der Neigungswinkel (S) der Schweißachsen (8A, 8B) ungefähr 15° beträgt.
